## Europäisches Patentamt
## European Patent Office
## Office européen des brevets

(19)

(11) Publication number: **0 028 050**
**B1**

(12)

# EUROPEAN PATENT SPECIFICATION

(45) Date of publication of patent specification: **09.11.83**

(51) Int. Cl.³: **C 02 F 3/28, C 12 M 1/00**

(21) Application number: **80201010.8**

(22) Date of filing: **24.10.80**

(54) Reactor for anaerobic fermentation of waste water.

(30) Priority: **26.10.79 NL 7907897**

(43) Date of publication of application:
**06.05.81 Bulletin 81/18**

(45) Publication of the grant of the patent:
**09.11.83 Bulletin 83/45**

(84) Designated Contracting States:
**BE DE FR GB IT LU NL SE**

(56) References cited:
**EP - A - 0 012 476**
**DE - B - 1 055 457**
**FR - A - 2 187 384**
**GB - A - 111 401**
**GB - A - 1 297 959**
**GB - A - 2 007 205**
**US - A - 3 520 802**
**US - A - 4 022 665**

(73) Proprietor: **STORK AMSTERDAM B.V.**
**2 Ketelstraat**
**NL-1021 JZ Amsterdam (NL)**

(72) Inventor: **van Drooge, Barend Lodewijk**
**48 Gerrit v.d. Veenstraat**
**NL-1077 EG Amsterdam (NL)**

(74) Representative: **van der Veken, Johannes Adriaan, Ir. et al,**
**EXTERPATENT 3 & 4 Willem Witsenplein**
**NL-2596 BK The Hague (NL)**

Courier Press, Leamington Spa, England.

# Reactor for anaerobic fermentation of waste water

The invention relates to a reactor for anaerobic fermentation of waste water, said reactor comprising a waste water inlet, a liquid outlet for the discharge of fermented waste water and a sludge outlet and at least one first and one second reactor space being in open communication with each other, the waste water inlet and the sludge outlet debouching into the first reactor space and the liquid outlet debouching in said second reactor space so that waste water enters the first reactor space and passes therefrom to the second reactor space, wherefrom it leaves the reactor.

A reactor of this type for anaerobic fermentation of waste water is known from GB—A—1.297.959.

A similar device has also be disclosed in EP—A—0.012.476, claiming a priority from December 8, 1978 and published June 25, 1980.

This document also discloses that it is recommended to subject the waste water to a prefermentation in a reactor comprising one reactor space preceding the main reactor in which methane is produced. In this preceding prefermentation reactor acidification takes place and the pH is controlled by adding calcium carbonate.

If waste waters have to be processed, which contain oil, carbohydrates, such as slimy plant material proteins and/or fibrous materials, such as waste waters derived from palm oil industries, the latter substances are difficult to remove from waste waters to be purified. Consequently, said oil, carbohydrates, proteins and/or fibrous materials, will arrive in the main fermentation reactor, where they may give rise to overloading of said reactor due to their long decomposition times.

In this respect it should be borne in mind that, especially, slimy carbohydrates and proteins will keep solid particles and oil particles suspended in liquids, so that said particles may be easily entrained with waste waters to be purified, into the main fermentation reactor, where they may give rise to overloading problems.

The present invention aims to provide a reactor for anaerobic fermentation of waste water of the abovementioned type which will not exhibit said disadvantages and in which solid particles and oil particles suspended in the waste water will be removed from said waste water as much as possible.

This object is attained in accordance with the invention in that the second reactor space is provided with pH controlling and adjusting means.

The beneficial result of a reactor of this type is, that both a high solid substance concentration prevails in the first reactor space and a low pH of 3 to 6, due to the acidifying action of the bacteria being present in the waste waters, so that proteins in said waste waters, being insoluble at a low pH (as appears from US—A—3.520.882) will either precipitate or will start floating, whilst on the other hand solid particles present in said first reactor space are filtered off. In this first reactor space, furthermore heavy metals, chlorinated hydrocarbon compounds and the like are retained, due to the presence of the solid substances.

In the second reactor space carbohydrates and proteins in the waste water may then be converted into volatile fatty acids and alcohol by controlling and adjusting the pH-value. Said conversion of proteins and carbohydrates will remove their suspending action upon oil particles and solid particles, so that the oil particles separate from the waste waters, whilst the solid particles still present precipitate.

Due to the advantageous presence of a precipitation cone suspended centrally of the reactor between the first and second reactor space, solid particles separating in said reactor space may be recovered as centrally as possible while, on the other hand, the means for suspending said precipitation cone will restrict a stirring movement from the second reactor space towards the first reactor space in which space such a stirring movement is undesirable.

The separation of liquid substances (such as oils), and solid substances is advantageously improved furthermore, in that the reactor comprises a separation zone which is connected with the liquid outlet. Such a separation zone can easily be formed in the upper side of the reactor by positioning a partition at said location.

So as to effect an optimum separation of liquid substances such as oils, from the prefermented waste water, said separation zone is connected with the second reactor space, through an overflow, which appropriately projects above the plane through the highest point of the liquid outlet. The latter measure ensures that the fermented waste water flowing into the separation zone over the overflow, will almost present a laminar flow, thus ensuring an optimum separation of liquid substances.

An additional improvement of the separation of liquid substances may still be effected by providing a separation zone, with means restricting the flow of liquids, which means preferably consist of a partition being connected with the upper side of the reactor, which partition extends in the precipitation space to below the upper edge of the overflow.

Said overflow may advantageously be provided with recesses, which are preferably tooth-shaped, and which improve a continuous stream of prefermented waste water.

The present invention will be illustrated with respect to an embodiment as shown in the drawing, wherein:

Figure 1 shows schematically a reactor for anaerobic fermentation of aqueous waste waters according to the invention and

Figure 2 shows a detail of the reactor of Fig. 1.

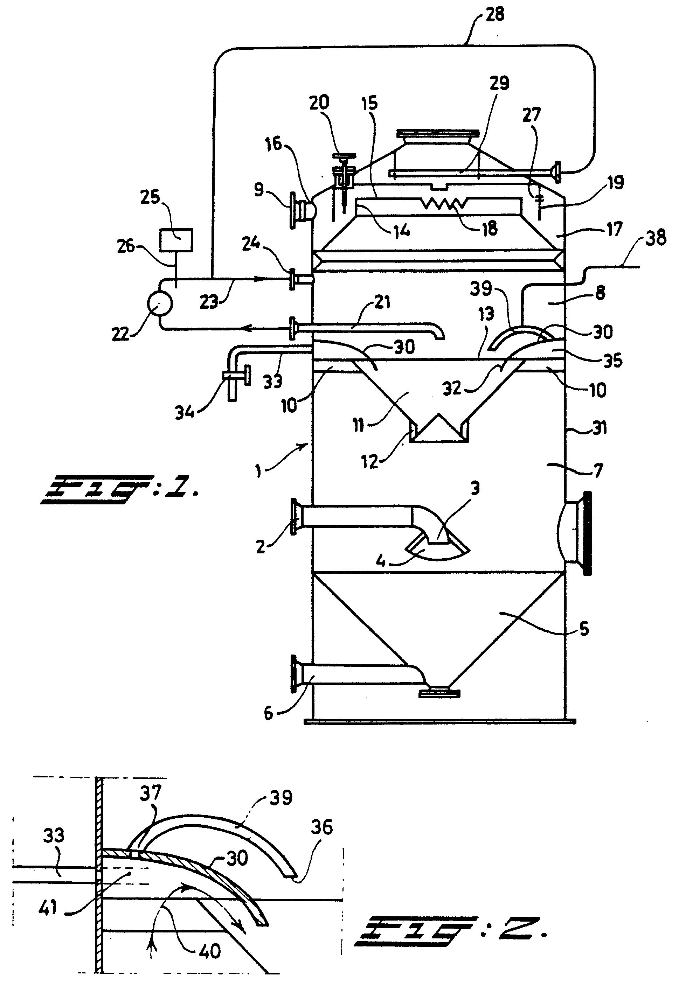

Figure 1 shows a reactor 1 being provided with a waste water inlet 2, debouching approximately into the centre of the reactor through a mouth 3 in the vicinity of which a collision plate 4 is accommodated, which plate improves an initial separation of solid substances from supplied waste waters.

The lower part of the reactor comprises a conical space 5 for receiving sludge, which derives from the waste water during its anaerobic fermentation and from protein sludge formed during bacterial acidification (anaerobic prefermentation). For discharging said sludge, a sludge outlet 6 is present. A high concentration of solid substances prevails in the first reactor space 7 of the reactor 1 as well as a low pH ranging from 3 to 6, due to the acidifying action of the bacteria present in the waste water. Consequently the proteins present in the waste water which are insoluble at a low pH, will precipitate.

As seen in the direction of the waste water outlet 9, a second reactor space 8 adjoins the first reactor space 7. In said second reactor space 8 carbohydrates and proteins in waste water are converted into volatile fatty acids and alcohol. The waste water to be purified and having been subjected to a prefermentation, flows from space 7 into the second reactor space 8 through openings between ribs 10.

The centre of the reactor comprises a precipitation cone 11 (suspended by means of the ribs 10) in which solid·substances from the second reactor space 8 may precipitate and then move into the first reactor space 7 through cone outlet 12. Due to the low pH prevailing at that location, the proteins present in the water will immediately precipitate and will be received in the sludge which is gathered in the conical outlet space 5.

The ribs 10 will interrupt the stirring movement performed in the second reactor space 8, so that an optimum precipitation of substances may take place in the first reactor space 7.

The upper side of the second reactor space 8 is surrounded by an annular overflow 14, having an upper edge 15, which has a level being higher than the upper side 16 of the outlet 9 for the discharge of the fermented waste water.

A precipitation space 17 is thus formed, for improving the precipitation of solid substances present in the fermented waste water, which flows across the upper edge 15 of the overflow 14.

In order to obtain a flow of liquid into the precipitation space being as even as possible, the circumference of the overflow 1 is lowered by means of the tooth-shaped recesses 18. In order to avoid floating oil particles as much as possible, an annular partition 19 is advantageously provided at the upper side of the reactor 1, which annular partition extends to below the upper edge 15 of the overflow 14 and of course below the tooth-shaped recesses 18. Said annular partition 19 is situated at about 2/3 of the distance between the inner wall of the reactor and the wall of the overflow 14. The annular partition 19 preferably comprises openings 27 for the escape of gases and, on the other hand, for retaining oily substances.

During the decomposition of proteins and carbohydrates which act as agents capable of suspending oil and solid substances, which may give rise to overloads impairing a subsequent anaerobic fermentation in a main reactor, the precipitation of solid substances from waste water will be so improved that said substances will, together with formed bacterial material, arrive in the first reactor space 7, through the precipitation cone 11.

Furthermore, oily substances being present in the waste water, together with oily substances which might have been formed during the anaerobic fermentation, can be drained off through drain cock 20.

For an effective control of the pH desired for the anaerobic fermentation in the second reactor space 8, a supply line 21 which debouches approximately into the centre of said space 8, is connected with a pump 22 which in turn, through line 23 is connected with a tangential inlet 24, so that liquid can be recirculated into said second reactor space 8. Said tangential inlet 24 ensures optimum stirring in space 8.

A storage vessel 25 for caustic soda or other hydroxides, connected with line 23 through a supply line 26, effects the control of the respective pH.

The liquid flowing towards the precipitation zone 17, may comprise foam, which is preferably removed by means of spray heads 29, which debouch above the inner circumference bounded by the overflow 14, the spray heads 29 said circuit being connected with the return line 23 through a line 28.

In the first reaction space there may be present liquid with suspended proteins, which could arrive in the second reactor space 8. In order to prevent this, a protein recovering region 35 is formed by a covering sheet 30, which curves from the reactor wall 31 to within the precipitation cone 11. The edge region 32 of covering sheet 30 extends to below the upper edge 13 of the precipitation cone 11. A protein recovering line 33 may then discharge suspended proteins which are gathered below the covering sheet 30. The protein recovering line 33 comprises a close off valve 34.

It should be noted that not only proteins, but also other floating substances may be gathered below the covering sheet 30.

Obviously gases might collect below covering sheet 30 and after some time the amount of gas may be so high that no further flow of liquid from space 7 into cone 11 is possible, this flow being indicated by the arrow 40. Thus, the curved covering sheet 30 is provided with a curved gas escape tube 39, which tube 39 debouches into the space 35 below covering sheet 30, near the outer wall 31 of the reactor 1 through opening 37. The tube 39 debouches by means of an end 36 at a point above the upper edge 13 of cone 11. The position of end 36 may be controlled by controlling means 38 allowing a displacement of the end 36 towards the upper side or towards the lower end of the reactor.

Preferably the end 36 is located in a flat plane including the protein recovering line 33 (as indicated by dotted lines). It should be noted that an opening 37 in the covering sheet 30 would disturb the working of the reactor as such an opening would allow a free flow of liquid into second space 8 without said flow passing the cone 11.

It should be noted that line 33 also allows removal of other floating substances 34 than proteins.

The tube 39 should not allow free flow of liquid through covering sheet 30 and thus this tube is a curved tube.

The flow of liquid from first space 7 into second space 8 is indicated by arrow 40.

## Claims

1. Reactor (1) for anaerobic fermentation of waste water said reactor comprising a waste water inlet (2), a liquid outlet (9) for the discharge of fermented waste water and a sludge outlet (6) and at least one first (7) and one second (8) reactor space being in open communication with each other, the waste water inlet and the sludge outlet debouching into the first reactor space (7) and the liquid outlet debouching in said second (8) reactor space so that waste water enters the first (7) reactor space and passes therefrom to the second (8) reactor space, wherefrom it leaves the reactor, characterized in that, the second (8) reactor space is provided with pH controlling and adjusting means (23, 25, 26).

2. Reactor according to claim 1, characterized in that the second reactor space (8) is provided with a take off line (21) and with a, tangentially disposed, return inlet line (24), said lines (21, 24) being connected with said pH controlling and adjusting means (23, 25, 26).

3. Reactor according to claim 1 or 2, characterized in that a precipitation cone (11) is suspended centrally of the reactor (1) between the first (7) and the second (8) reactor space.

4. Reactor according to claims 1 to 3, characterized in that, the reactor is provided with separation means upstream of the reactor liquid outlet.

5. Reactor according to claims 1 to 4, characterized in that, the separation means consist of an annular precipitation zone connected with the liquid outlet (9) and with the second reactor space (8), through an overflow.

6. Reactor according to claim 5, characterized in that the separation space (17) is bounded by an overflow (14), the level of the upper edge (15) of same projecting above the plane through the highest point (16) of the liquid outlet (9) at least one part of the overflow (14) being lower than the level of said upper edge (15), preferably the overflow (14) being provided with toothshaped recesses.

7. Reactor according to any of the claims 4 to 6, characterized in that a separation space (17) is provided with a partition (19) restricting the flow of liquids, said partition being connected with the upper side of the reactor, and extending in the separation space (17) to below the upper edge (15) of the overflow (14), said upper side of the reactor comprising a draincock (20) for discharging liquid substances having a lower density than water while the partition (19) is provided with openings for the escape of gases.

8. Reactor according to claim 3, characterized in that the reactor comprises a gathering chamber (35) for gathering the proteins floating upon liquids in the first reaction space (7), said gathering chamber (35) being bounded by a covering sheet (30) extending from the reactor wall (31) into the precipitation cone (11) and a gas escaping tube (39) debouching at one end into said gathering chamber (35) below said covering sheet (30) and at the other end (36) above the upper edge (13) of cone (11).

9. Reactor according to claim 8, characterized in that a floating solids drain line (33) debouches into the aforementioned gathering chamber (35).

10. Reactor according to any of the preceding claims, characterized in that the waste water inlet (2) comprises a collision plate (4) in the vicinity of the mouth (3) of said inlet (2).

11. Reactor according to any of the claims 5—10, characterized in that a spray heads (29) are provided above the separation space (17).

## Revendications

1. Réacteur (1) pour la fermentation anaérobie d'eaux résiduaires, ledit réacteur comprenant une entrée (2) pour les eaux résiduaires, une sortie (9) de liquides servant à la décharge des eaux résiduaires fermentées et une sortie (6) de boues, au moins un premier espace (7) et un deuxième espace (8) du réacteur étant en communication ouverte l'un avec l'autre, l'entrée des eaux résiduaires et la sortie des boues débouchant dans le premier espace (7) du réacteur et la sortie des liquides débouchant dans le deuxième espace (8) du réacteur si bien que les eaux résiduaires entrent dans le premier espace (7) du réacteur et passent de là au deuxième espace (8) du réacteur, d'où elles quittent le réacteur, caractérisé en ce que le deuxième espace (8) du réacteur est doté d'un moyen de commande et d'ajustement de pH (23, 25, 26).

2. Réacteur selon la revendication 1, caractérisé en ce que le deuxième espace (8) du réacteur est doté d'une canalisation de dérivation (21) et d'une canalisation d'entrée de retour (24) disposée tangentiellement, lesdites canalisations (21, 24) étant connectées audit moyen de commande et d'ajustement de pH (23, 25, 26).

3. Réacteur selon la revendication 1 ou 2, caractérisé en ce qu'un cône de précipitation (11) est suspendu centralement dans le réacteur (1) entre le premier espace (7) et le deuxième espace (8) du réacteur.

4. Réacteur selon les revendications 1 à 3, caractérisé en ce que le réacteur est doté d'un moyen de séparation disposé en amont de la sortie de liquides du réacteur.

5. Réacteur selon les revendications 1 à 4, caractérisé en ce que le moyen de séparation consiste en une zone de précipitation annulaire connectée à la sortie de liquides (9) et au deuxième espace (8) du réacteur par l'intermédiaire d'un dispositif de tropplein.

6. Réacteur selon la revendication 5, caractérisé en ce que l'espace de séparation (17) est limité par un dispositif de tropplein (14), le niveau du bord supérieur (15) de ce dernier faisant saillie au-dessus du plan passant par le point le plus haut (16) de la sortie de liquides (9), au moins une partie du dispositif de tropplein (14) étant située plus bas que le niveau dudit bord supérieur (15), le dispositif de tropplein étant de préférence doté d'évidements en forme de dents.

7. Réacteur selon l'une quelconque des revendications 4 à 6, caractérisé en ce qu'un espace de séparation (17) est doté d'une cloison (19) qui restreint l'écoulement des liquides, ladite cloison étant connectée au côté supérieur du réacteur et se prolongeant dans l'espace de séparation (17) jusqu'au-dessous du bord supérieur (15) du dispositif de trop-plein (14), ledit côté supérieur du réacteur comprenant un robinet de vidange (20) servant à décharger les substances liquides ayant une densité inférieure à celle de l'eau, tandis que la cloison (19) est dotée d'ouvertures destinées à permettre aux gaz de s'échapper.

8. Réacteur selon la revendication 3, caractérisé en ce que le réacteur comprend une chambre de rassemblement (35) destinée à rassembler les protéines flottant sur les liquides dans le premier espace (7) de réaction, ladite chambre de rassemblement (35) étant limitée par un feuillet de recouvrement (30) qui va de la paroi (31) du réacteur jusque dans le cône de précipitation (11), un tube (39) de fuite des gaz débouchant par une de ses extrémités de ladite chambre de rassemblement (35) au-dessous dudit feuillet de recouvrement (30) et, par son autre extrémité (36), au-dessus du bord supérieur (13) du cône (11).

9. Réacteur selon la revendication 8, caractérisé en ce qu'une canalisation (33) de vidange de solides flottants débouche dans la chambre de rassemblement (35) ci-dessus mentionnée.

10. Réacteur selon l'une quelconque des revendications précédentes, caractérisé en ce que l'entrée (2) d'eaux résiduaires comprend une plaque de collision (4) disposée au voisinage de l'orifice (3) de ladite entrée (2).

11. Réacteur selon l'une quelconque des revendications 5 à 10, caractérisé en ce que des têtes d'aspersion (29) sont prévues au-dessus de l'espace de séparation (17).

**Patentansprüche**

1. Reaktionsbehälter (1) für anaerobe Fermentierung von Abwasser, mit einem Abwassereinlaß (2), einem Flüssigkeitsauslaß (9) zum Ablassen von fermentiertem Abwasser und einem Schlammauslaß (6) und wenigstens einem ersten (7) und einem zweiten (8) Reaktionsbehälter-Raum, die miteinander in offener Verbindung stehen, wobei der Abwassereinlaß und der Schlammauslaß in den ersten Reaktionsbehälter-Raum (7) und der Flüssigkeitsauslaß in den zweiten Reaktionsbehälter-Raum (8) münden, so daß Abwasser in den ersten Reaktionsbehälter-Raum (7) eintritt und von diesem in den zweiten Reaktionsbehälter-Raum (8) übertritt, von wo aus es den Reaktionsbehälter verläßt, dadurch gekennzeichnet, daß der zweite Reaktionsbehälter-Raum (8) mit pH-Kontroll- und Einstellmitteln (23, 25, 26) versehen ist.

2. Reaktionsbehälter nach Anspruch 1, dadurch gekennzeichnet, daß der zweite Reaktions-behälter-Raum (8) mit einer Entnahmeleitung (21) und mit einer tangential angeordneten Rücklauf-Einlaßeitung (24) versehen ist, wobei die Leitungen (21, 24) mit den pH-Kontroll- und Einstellmitteln (23, 25, 26) verbunden sind.

3. Reaktionsbehälter nach Anspruch 1 oder 2, dadurch gekennzeichnet, daß ein Abscheidungskonus (11) zentral im Reaktionsbehälter (1) zwischen dem ersten (7) und dem zweiten (8) Reaktionsbehälter-Raum aufgehängt ist.

4. Reaktionsbehälter nach den Ansprüchen 1 bis 3, dadurch gekennzeichnet, daß der Reaktionsbehälter mit Trannmitteln stromaufwärts des Reaktionsbehälter-Flüssigkeitsauslasses versehen ist.

5. Reaktionsbehälter nach den Ansprüchen 1 bis 4, dadurch gekennzeichnet, daß die Trennmittel aus einer ringförmigen Abscheidungszone bestehen, die durch einen Überlauf mit dem Flüssigkeitsauslaß (9) und mit dem zweiten Reaktionsbehälter-Raum (8) verbunden sind.

6. Reaktionsbehälter nach Anspruch 5, dadurch gekennzeichnet, daß der Trannraum (17) durch einen Überlauf (14) begrenzt ist, und das Niveau der Oberkante (15) desselben über die Ebene durch den höchsten Punkt (16) des Flüssigkeitsauslasses (9) hinausragt, und wenigstens ein Teil des Überlaufs (14) niedriger ist als das Niveau der Oberkante (15), und der überlauf (14) mit zahnförmigen Vertiefungen versehen ist.

7. Reaktionsbehälter nach einem der Ansprüche 4 bis 6, dadurch gekennzeichnet, daß ein Trennraum (17) eine die Strömung von Flüssigkeiten einschränkende Trennwand (19) aufweist, die mit der Oberseite des Reaktionsbehälters verbunden ist und im Trennraum (17) bis unterhalb der Oberkante (15) des Überlaufs (14) reicht, wobei die Oberseite des Reaktonsbehälters einen Ablaßhahn (20) zum Ablassen von flüssigen Substanzen mit einer geringeren Dichte als Wasser aufweist, während die Trennwand (19) mit Öffnungen für den Austritt von Gasen versehen ist.

8. Reaktionsbehälter nach Anspruch 3, dadurch gekennzeichnet, daß der Reaktions-behälter eine Sammelkammer (35) zum Sammeln der Proteine aufweist, die auf Flüssigkeiten im ersten Reaktionsraum (7) schwimmen, und die Sammelkammer (35) durch eine Abdeckplatte (30) begrenzt ist, die sich von der Reaktionsbehälter-Wand (31) in den Abscheidungskonus (11) hinein erstreckt, wobei ein Gasaustrittsrohr (39) an einem Ende in die Sammelkammer (35) unterhalb der Abdeckplatte (30) und am anderen Ende (36) oberhalb der Oberkante (13) des Konus (11) mündet.

9. Reaktionsbehälter nach Anspruch 8, dadurch gekennzeichnet, daß eine Ablaßleitung (33) für schwimmende Feststoffe in die Sammelkammer (35) mündet.

10. Reaktionsbehälter nach einem der vorhergehenden Ansprüche, dadurch gekennzeichnet, daß der Abwassereinlaß (2) eine Prallplatte (4) in der Nähe der Mündung des Einlasses (2) aufweist.

11. Reaktionsbehälter nach einem der Ansprüche 5 bis 10, dadurch gekennzeichnet, daß Sprühköpfe (29) oberhalb des Trennraums (17) vorgesehen sind.

FIG:1.

FIG:2.